Europäisches Patentamt

European Patent Office

Office européen des brevets

(19)

(11) Veröffentlichungsnummer: **0 145 646**
**B1**

(12) **EUROPÄISCHE PATENTSCHRIFT**

(45) Veröffentlichungstag der Patentschrift: **04.04.90**

(21) Anmeldenummer: **84730130.6**

(22) Anmeldetag: **30.11.84**

(51) Int. Cl.⁵: **F 16 G 11/12** :

(54) **Vorrichtung zum Verbinden von Bauteilen sowie Spann- und/oder Kontrollvorrichtungen mit Gurten.**

(30) Priorität: **06.12.83 DE 3344485**

(43) Veröffentlichungstag der Anmeldung:
**19.06.85 Patentblatt 85/25**

(45) Bekanntmachung des Hinweises auf die
Patenterteilung:
**04.04.90 Patentblatt 90/14**

(84) Benannte Vertragsstaaten:
**AT CH DE GB IT LI SE**

(56) Entgegenhaltungen:
**EP-A-0 050 361**
**FR-A-2 407 097**
**FR-A-2 461 675**
**GB-A-1 168 349**
**GB-A-1 337 679**
**US-A-2 710 436**
**US-A-3 131 450**

(73) Patentinhaber: **RUD-Kettenfabrik Rieger & Dietz
GmbH u. Co.
Friedensinsel
D-7080 Aalen 1 (DE)**

(72) Erfinder: **Speich, Helmut
Filderweg 26
D-7081 Hüttlingen (DE)**

(74) Vertreter: **Böning, Manfred, Dr. Ing. et al
Patentanwälte Dipl.-Ing. Dieter Jander Dr. Ing.
Manfred Böning Kurfürstendamm 66
D-1000 Berlin 15 (DE)**

## Beschreibung

Die Erfindung betrifft eine Vorrichtung zum Verbinden von Bauteilen—wie Haken, Ösen, Schäkel, Kettenglieder od. dgl.—sowie von Spann—und/oder Kontrollvorrichtungen von Hebe-und/oder Verzurranordnungen mit Gurten, bei der zwischen zwei miteinander verbundenen Seitenwänden zwei parallel zueinander angeordnete Querträger mit kreissegmentförmigem Querschnitt verlaufen, die zum Festhalten eines Gurtes unter Ausnutzung selbsthemmender Reibung dienen.

Eine Vorrichtung der vorstehenden Art ist aus der EP—A—0 050 361 bekannt. Bei der bekannten Vorrichtung sind die Seitenwände fest miteinander durch die beiden Querträger verbunden und diese seitlich versetzt zueinander derart angeordnet, daß ihre geraden Flächen parallel zur Sollorientierung des um die Querträger herumgelegten und zwischen ihnen hindurchgefädelten Gurtes verlaufen. Die bekannte Vorrichtung vermag aus mehreren Gründen nicht voll zu befriedigen . Ein erster Grund besteht darin, daß infolge der Anordnung der Querträger die Festigkeit der Verbindung des Gurtes mit der Vorrichtung in Fällen zu wünschen übrig läßt, in denen der Gurt vorübergehend entlastet wird. Als nachteilig erweist sich außerdem der Umstand, daß der Gurt die Vorrichtung nicht an einer genau definierten Stelle verläßt, da auch dies zu einer Beeinträchtigung der Festigkeit der Verbindung zwischen dem Gurt und ihr führen kann.

Der Erfindung liegt die Aufgabe zugrunde, eine Vorrichtung der in Betracht gezogenen Art zu shcaffen, die leicht handhabbar ist, d.h. insbesondere einen schnellen Anschluß eines Gurtes ermöglicht, und die darüber hinaus einen sicheren Sitz des Gurtes gewährleistet.

Diese Aufgabe wird erfindungsgemäß dadurch gelöst, daß bei einer Vorrichtung der in Betracht gezogenen Art die einander zugewandten geraden Flächen der Querträger einen Schlitz begrenzen, der sich quer zu einer Linie erstreckt, die durch die Mitte eines Führungsspaltes verläuft, der von zwei die Seitenwände miteinander verbindenden Gurtführungsstegen gebildet wird, und daß mindestens der den Gurtführungsstegen zugewandte Querträger zum Einlegen einer Gurtschlaufe lösbar in kreissegmentförmigen, fluchtend zueinander angeordneten Aussparungen der Seitenwände gelagert ist.

Die erfindungsgemässe Vorrichtung bietet den Vorteil, daß sich ein hoher Umschlingungsgrad der zur Gurtbefestigung verwendeten Querträger sicherstellen läßt. Ihre Handhabung ist einfach und das Verbinden und Lösen eines Gurtes kann sehr schnell vonstatten gehen.

Die Erfindung wird im folgenden anhand der beigefügten Zeichnung näher erläutert. Es zeigen

Figur 1 einen Schnitt durch eine Vorrichtung,

Figur 2 eine Seitenansicht der Vorrichtung gemäß Figur 1,

Figur 3 eine Draufsicht auf die Vorrichtung gemäß Figur 1 und 2,

Figur 4 das Einführen eines Gurtes in einer Vorrichtung gemäß Figuren 1—3,

Figur 5 einen fertig in einer Vorrichtung gemäß Figuren 1—3 eingeführten Gurt und

Figur 6 die Anordnung einer Vorrichtung an einer Kontrollvorrichtung für die Gurtspannung.

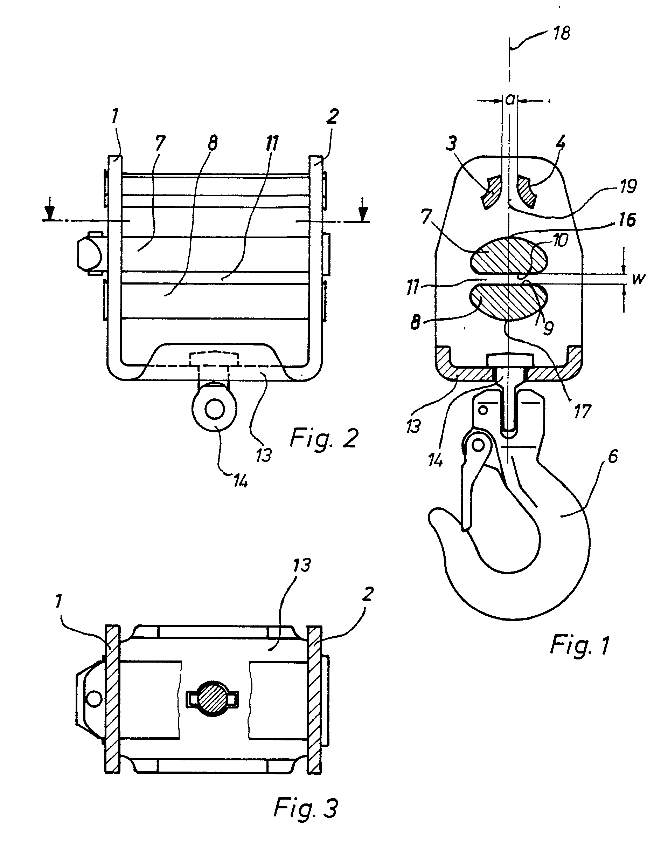

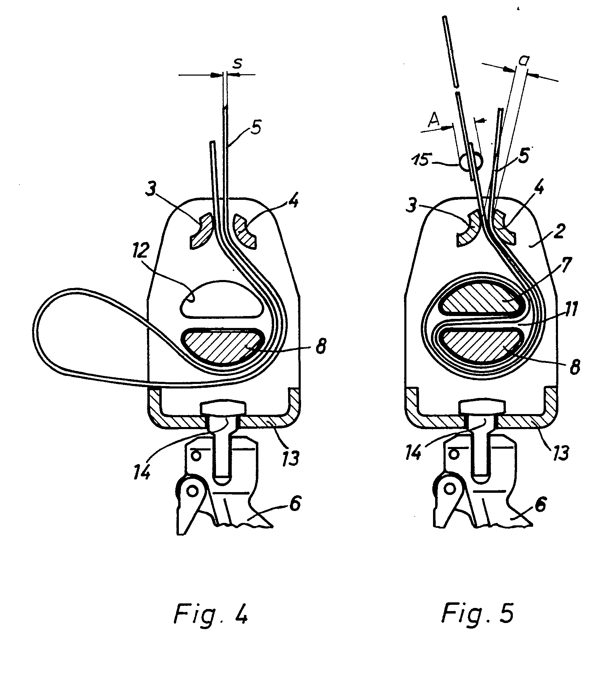

In den Figuren 1—5 sind 1 und 2 zwei durch zwei Gurtführungsstege 3 und 4 verbundene Seitenwände eine Vorrichtung zum Verbinden eines Gurtes 5 mit einem ‚von einem Haken gebildeten Bauteil 6. Die Seitenwände 1 und 2 werden zusätzlich durch zwei Querträger 7 und 8 überbrückt, von denen mindestens der den Gurtführungsstegen zugewandte Querträger 7 lösbar in den Seitenwänden gelagert ist. Die Querträger haben einen kreissegmentförmigen Querschnitt. Ihre einander zugewandten geraden Flächen 9 und 10 begrenzen einen Schlitz 11, dessen Weite w im wesentlichen gleich der zweifachen Stärke s des anzuschliessenden Gurtes 5 ist. Zur Aufnahme der Querträger in den Seitenwänden dienen Aussparungen 12.

Die Seitenwände 1 und 2 stehen nicht nur durch die Gurtführungsstege 3 und 4 miteinander in Verbindung, sodern darüberhinaus über ein Joch 13. In diesem Joch 13 ist drehbar ein Wirbel 14 für das Bauteil 6 gelagert.

Der Abstand a zwischen den Gurtführungsstegen 3 und 4 ist größer als die zweifache Stärke s des Gurtes 5, jedoch kleiner als die Stärke A eines am Ende des Gurtes 5 angeordneten Sicherungsanschlages 15, der vorzugsweise von einer Kennzeichnungsplakette für den Gurt gebildet wird, die nach dem Verbinden des Gurtes 5 mit der Vorrichtung am freien Gurtende befestigt wird.

Die Anordnung der Gurtführungsstege 3 und 4 sowie der Querträger 7 und 8 ist so getroffen, daß die Scheitelpunkte 16 und 17 der Querschnitte der Querträger 7 und 8 auf einer Linie 18 liegen, die durch die Mitte des von den Gurtführungsstegen 3 und 4 begrenzten Führungsspaltes 19 verläuft.

Die Gurtführungsstege sind, wie aus den Figuren 1, 4 und 5 erkennbar ist, mit runden Gurtführungsflächen versehen, die eine Beschädigung des Gurtes im Bereich der Gurtführungsstege ausschliessen.

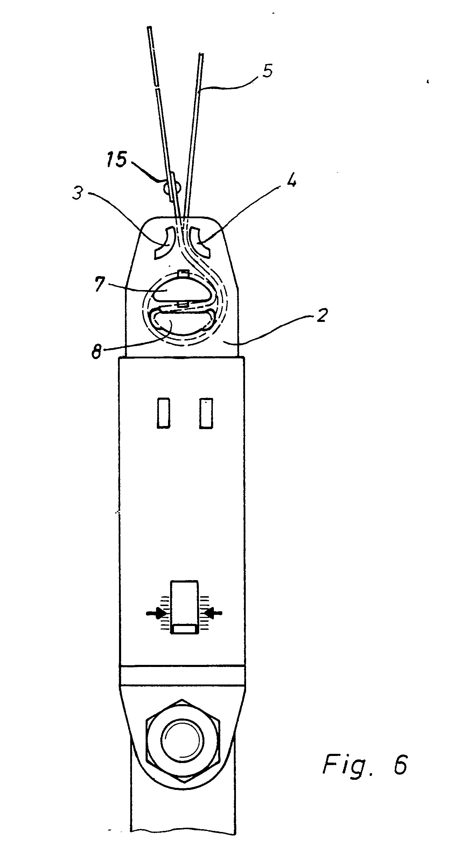

Die Figur 6 zeigt eine Kontrollvorrichtung für die Vorspannkraft eines Gurtes 5, die mit einer Vorrichtung ausgestattet ist, die der in den Figuren 1—5 beschriebenen Vorrichtung weitgehend entspricht. Für gleiche Teile wurden in dieser Figur die gleichen Bezugszeichen verwendet.

## Patentansprüche

1. Vorrichtung zum Verbinden von Bauteilen—wie Haken (6), Osen, Schäkeln, Kettengliedern od. dgl.—sowie von Spann- und/oder Kontrollvorrichtungen von Hebe- und/oder Verzurranordnungen mit Gurten (5), bei der zwischen zwei miteinander verbundenen Seitenwänden (1, 2) zwei parallel zueinander angeordnete Querträger (7, 8) mit kreissegmentförmigem Querschnitt verlaufen, die zum Festhalten eines Gurtes unter Ausnutzung selbsthemmender Reibung dienen, dadurch gekennzeichnet, daß die einander zugewandten geraden Flächen (9, 10) der Querträger (7, 8) einen Schlitz (11) begrenzen, der sich quer zu einer Linie (18) erstreckt, die durch die Mitte eines Führungsspaltes (19) verläuft, der von zwei die Seitenwände (1, 2) miteinander verbindenden Gurtführungsstegen (3, 4) gebildet wird, und daß mindestens der den Gurtführungsstegen (3, 4) zugewandte Querträger (7) zum Einlegen einer Gurtschlaufe lösbar in kreissegmentförmigen, fluchtend zueinander angeordneten Aussparungen (12) der Seitenwände (1, 2) gelagert ist.

2. Vorrichtung nach Anspruch 1, dadurch gekennzeichnet, daß die Seitenwände (1, 2) durch die Gurtführungsstege (3, 4) und ein im Abstand von diesen Angeordnetes Joch (13) miteinander verbunden sind.

3. Vorrichtung nach Anspruch 1 oder 2, dadurch gekennzeichnet, daß der Abstand (w) zwischen den einander zugewandten geraden Flächen (9, 10) der Querträger (7, 8) im wesentlichen gleich der zweifachen Stärke (s) des anzuschliessenden Gurtes (5) ist.

4. Vorrichtung nach einem der Ansprüche 1 bis 3, dadurch gekennzeichnet, daß der Abstand (a) zwischen den Gurtführungsstegen (3, 4) größer als die zweifache Stärke (s) des Gurtes (5) und kleiner als die Stärke (A) eines am Ende des Gurtes (5) angeordneten Sicherungsanschlages (15) ist.

5. Vorrichtung nach Anspruch 4, dadurch gekennzeichnet, daß der Sicherungsanschlag (15) von einer am Ende des Gurtes (5) befestigten Kennzeichnungsplakette gebildeb wird.

6. Vorrichtung nach einem der Ansprüche 1 bis 5, dadurch gekennzeichnet, daß die Scheitelpunkte (16, 17) der Querschnitte der Querträger (7, 8) auf einer Linie (18) liegen, die durch die Mitte eines von den Gurtführungsstegen (3, 4) begrenzten Führungsspaltes (19) verläuft.

7. Vorrichtung nach einem der Ansprüche 1 bis 6, dadurch gekennzeichnet, daß die Gurtführungsstege (3, 4) mit runden Führungsflächen für den Gurt (5) versehen sind.

**Revendications**

1. Dispositif pour la liaison de pièces détachées telles que des crochets (6), des anneaux, des manilles, des maillons etc... de dispositifs de tension et/ou de contrôle d'installations de levage et/ou d'amarrage avec des sangles (5), dans lequel deux traverses (7, 8) ayant des sections transversales en forme de segments de cercle s'étendent parallèlement l'une par rapport à l'autre entre deux parois latérales (1, 2) reliées l'une à l'autre, les traverses étant destinées à la retenue d'une sangle et utilisant un frottement autobloquant, caractérisé en ce que les surfaces planes (9, 10) des traverses (7, 8) sont tournées l'une vers l'autre de manière à délimiter un interstice (11) s'étendant perpendiculairement à une ligne (18) traversant le centre d'une fente de guidage (19) formée par deux entretoises (3, 4) de guidage de sangle reliant les parois latérales (1, 2) l'une à l'autre, et en ce qu'au moins la traverse (7) tournée vers le entretoises (3, 4) de guidage de sangle est, pour l'introduction d'une boucle de sangle, logée de manière détachable dans des évidements (12) en forme de segments de cercle ménagés dans les parois latérales (1, 2) de manière à être alignés l'un sur l'autre.

2. Dispositif suivant la revendication 1, caractérisé en ce que les parois latérales (1, 2) sont reliés l'une à l'autre par les entretoises (3, 4) de guidage de sangle et par un joug (13) disposé de manière à être espacé de celles-ci.

3. Dispositif suivant la revendication 1 ou 2, caractérisé en ce que la distance (w) entre les surfaces planes (9, 10) des traverses (7, 8) tournées l'une vers l'autre est sensiblement égale à deux fois l'épaisseur (s) de la sangle (5) devant être reliée.

4. Dispositif suivant l'une des revendications 1 à 3, caractérisé en ce que la distance (a) entre les entretoises (3, 4) de guidage de sangle est supérieure à deux lois l'épaisseur (s) de la sangle (5) et inférieure à l'épaisseur (A) d'une butée de sécurité (15) disposée à l'extrémité de la sangle (5).

5. Dispositif suivant la revendication 4, caractérisé en ce que la butée de sécurité (15) est formée par une plaque d'identification fixée à l'extrémité de la sangle (5).

6. Dispositif suivant l'une des revendications 1 à 5, caractérisé en ce que les sommets (16, 17) de la section transversale des traverses (7, 8) sont disposés sur une ligne (18) s'étendant à travers le centre de la fente de guidage (19) délimitée par les entretoises (3, 4) de guidage de la sangle.

7. Dispositif suivant l'une des revendications 1 à 6, caractérisé en ce que les entretoises (3, 4) de guidage de sangle comportent des surfaces de guidage arrondies pour la sangle (5).

**Claims**

1. A device for connecting belts (5) to components such as hooks (6), eyelets, shackles, chain links or the like as well as to tensioning and/or checking devices for lifting and/or clamping systems, comprising two parallel cross-members (7, 8) having a circular segmental cross-section extending between two interconnected side walls (1, 2) and being used for securing a belt by self-locking friction, characterised in that the facing straight surfaces (9, 10) of the cross-members (7, 8) bound a slot (11) extending transversely through a line (18) through the middle of a guide gap (19) formed by two belt guide webs (3, 4) connecting the side walls (1, 2) to one another, and at least the transverse member (7) facing the belt guide web (3, 4) is releasably mounted in circular segmental aligned recesses (12) in the side walls (1, 2) for inserting a loop of the belt.

2. A device according to Claim 1, characterised in that the side walls (1, 2) are connected by the belt guide webs (3, 4) and a yoke (13) spaced therefrom.

3. A device according to Claim 1 or 2, characterised in that the distance (w) between the facing straight surfaces (9, 10) of the cross-members (7, 8) is substantially equal to twice the thickness (s) of the belt (5) to be connected.

4. A device according to any of Claims 1 to 3, characterised in that the distance (a) between the belt guide webs (3, 4) is greater than twice the thickness (s) of the belt (5) and less than the thickness (A) of a safety stop (15) disposed at the end of the belt (5).

5. A device according to Claim 4, characterised in that the safety stop (15) is an identification plate secured to the end of the belt (5).

6. A device according to any of Claims 1 to 5, characterised in that the apices (16, 17) of the cross-sections of the cross-members (7, 8) lie on a line (18) extending through the middle of a guide gap (19) bounded by the belt guide webs (3, 4).

7. A device according to any of Claims 1 to 6, characterised in that the belt guide webs (3, 4) have round guide surfaces for the belt (5).

Fig. 2

Fig. 1

Fig. 3

EP 0 145 646 B1

Fig. 4          Fig. 5

2

*Fig. 6*